# EUROPEAN PATENT SPECIFICATION

(11) **EP 1 558 074 B1**
(45) Date of publication and mention of the grant of the patent: **23.04.2008**
(21) Application number: 03773837.4
(22) Date of filing: 30.10.2003
(51) Int. Cl.: A01K 5/00, B01F 13/00, B01F 7/02, B01F 7/08

(54) **BULK MATERIAL MIXING APPARATUS**
MISCHVORRICHTUNG FÜR SCHÜTTGUT
APPAREIL DE MELANGE DE MATERIAU EN VRAC

(30) Priority: 04.11.2002 GB 0225682
(43) Date of publication of application: 03.08.2005
(73) Proprietor: HARRY WEST (PREES) LIMITED, Whitchurch Shropshire, SY13 2BT (GB)
(72) Inventor: WEST, Harry, Harry West (Prees) Limited, Shropshire SY13 2BT (GB)
(74) Representative: Croston, David
(86) International application number: PCT/GB2003/004696
(87) International publication number: WO 2004/040967

(56) References cited:
- EP-B- 0 907 408
- GB-A- 2 232 363
- US-A- 5 439 182
- PATENT ABSTRACTS OF JAPAN vol. 1996, no. 08, 30 August 1996 (1996-08-30) & JP 08 103643 A (TANAKA GIKEN KOGYO KK), 23 April 1996 (1996-04-23)

## Description

The present invention relates to bulk material mixing apparatus for the mixing of bulk material, in particular agricultural material such as animal feedstuff or manure.

Known mixer vehicles such as muck spreaders have a container body which receives material, and a rotatable shaft which is mounted on the body. The body has a discharge zone and a non-discharge zone, and an outlet in the discharge zone. The shaft has a forward auger which on rotation urges material from the non-discharge zone into the discharge zone, the action of the auger mixing the material. When the outlet is open, material from the discharge zone is discharged away from the body. It is common for the mixer vehicle to be driven to different locations where the outlet is opened so as to distribute the material. However during movement to different locations, the shaft continues to rotate, and when the outlet is closed there is a tendency for material to accumulate in the discharge zone where it is not mixed and can block the outlet.

Our European patent EP0907408 addresses this problem by providing a return helical blade auger on the shaft which acts to urge material away from the discharge zone so as to reduce the likelihood of material accumulating in the discharge zone. However, in some situations, for example where the material is wet or sticky, there is still a tendency for material to accumulate in the discharge zone. Furthermore, there are situations where material needs to be more thoroughly mixed.

An object of the present invention is to provide an improved mixer vehicle.

According to a first aspect of the present invention there is provided a bulk material mixing apparatus having a container body for receiving material, the body having a discharge zone and a non-discharge zone, and a rotatably driven shaft arranged within and extending along the body, the shaft carrying a forward ribbon auger and a return ribbon auger which is oppositely handed to the forward ribbon auger provided on the shaft, the augers arranged such that on rotation of the shaft, the forward ribbon auger urges material in a forward direction from the non-discharge zone towards the discharge zone, and the return ribbon auger urges material in a return direction which is substantially opposite to the forward direction.

Thus material is urged from the discharge zone to the non-discharge zone so as to reduce the likelihood of material accumulating in the discharge zone. The ribbon auger is also less prone to clogging than known blade type augers.

In one embodiment the return ribbon auger extends into the non-discharge zone. Thus the material is urged in both the forward and return directions in the non-discharge zone so as to increase the intensity of mixing of material and reduce the likelihood of material accumulating in the discharge zone.

Preferably the return ribbon auger extends substantially along the length of the body. Thus material is urged in both forward and return directions along the entire length of the body which further increases the intensity of mixing and further reduces the likelihood of material accumulating in the discharge zone.

Preferably two or three return ribbon augers are provided. By increasing the number of return ribbon augers, the quantity of material urged in the return direction increases due to the increased auger surface area, thereby further reducing the likelihood of material accumulating in the non-discharge zone, and further increasing the intensity of mixing.

Preferably rotation of the shaft defines a forward auger cylinder of revolution which is significantly greater than the cylinder of revolution of the return ribbon auger, such that the forward auger moves more material per revolution than the return ribbon auger.

Preferably the return ribbon auger defines a cylinder of revolution in the non-discharge zone which is substantially the same as its cylinder of revolution in the discharge zone.

Preferably the non-discharge zone comprises a rear chamber and a forward chamber situated between the rear chamber and the discharge zone and the or each return ribbon auger extends substantially the length of the discharge zone and the forward chamber. Thus since there is no return ribbon auger in the rear chamber, there is no urging of material in the return direction in the rear chamber, thereby preventing a build-up of pressure in the rear chamber..

Most preferably two or three forward ribbon augers are provided in the rear chamber and one forward ribbon auger is provided in the forward chamber. One of the forward ribbon augers in the rear chamber, and the forward ribbon auger in the forward chamber may include a blade along the outer edge such that the forward ribbon auger in the forward chamber and one of the two or three forward ribbon augers in the rear chamber urge material in the forward direction. Thus since there is only one forward ribbon auger urging material in the forward direction, and two or three return ribbon augers urging material in the return direction there is less likelihood of material accumulating in the discharge zone.

A bulk material mixing apparatus in the form of a mixer vehicle will now be described by way of example only with reference to the accompanying drawings in which:
Figure 1 is a plan view of a mixer vehicle according to a first aspect of the present invention, and
Figure 2 is a front view of the mixer vehicle of figure 1.

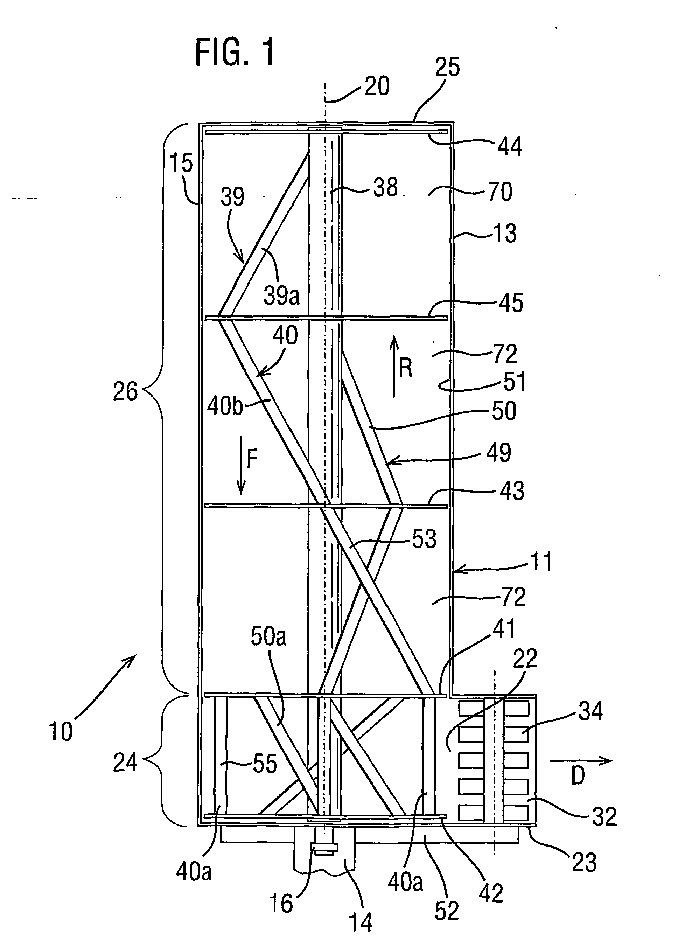

In figure 1, a mixer vehicle 10 comprises a container body 11 with a front wall 23 and a rear wall 25, the body being mounted on a two-wheel chassis 12 with a draw bar 14 mounted on the front wall 23 of the body 11. The mixer vehicle is drawn by a vehicle, in this case a tractor (not shown), by connecting the draw bar 14 to a tow bar on the tractor. The draw bar 14 has a connection 16 which provides a power input from the tractor.

The body 11 has a semi-cylindrical base portion 18 centred on a longitudinal axis 20 with side walls 13,15 extending substantially vertically from the base portion 18. The side walls 13,15 and the front and rear walls 23,25 define the body which has an open top 29 into which material, for example animal feed, is introduced.

The body 11 further has a discharge opening 22 which extends longitudinally part way down one side wall 13 from the front wall 23. The discharge opening 22 partitions the length of the body 11 into a discharge zone 24 extending between the front wall 23 and the end of the opening 22, and a non-discharge zone 26 extending from the end of the opening 22 to the rear wall 25. In this embodiment, the discharge zone 24 has a length which is approximately 20% of the total length of the body 11.

The opening 22 is provided with a rotating door 28 which is operated by an actuator 30. The door 28 is moved by the actuator 30 between fully closed and variable open positions so as to vary the effective size of the opening 22. In-other embodiments a non-rotating door may be used, for example a vertically or horizontally sliding door.

A feed out chamber 32 projects beyond the opening 22 from the side wall 13 and contains a feed out rotor 34 having vanes for propelling material from the discharge zone 22 clear of the body 11 as indicated by arrow D.

A rotatable shaft 38 extends between, and is journalled to, front 23 and rear 25 walls of the body 11. The rotatable shaft 38 of the body and feed out rotor 34 are driven in the same direction via a transmission 52 which is connected to the tractor by the connection 16.

The rotatable shaft carries front and rear arms 42,44 at each end, and intermediate arms 41,43,45 spaced between the front and rear arms. A rear chamber 70 is defined between the rear wall 25 and intermediate arm 45. A front chamber 72 is defined between intermediate arm 45 and intermediate arm 41, i.e. between the rear chamber 70 and the discharge zone 24.

Three forward ribbon augers 39 in the form of three sweep bars 39a (only one shown in figure 1) are carried by and are regularly angularly spaced about shaft 38. The extremities of sweep bars 39a are carried on front and intermediate arms 44,45 such that the bars extend substantially along the total length of the rear chamber.

One forward ribbon auger 40 in the form of sweep bar 40b is carried by and is regularly angularly spaced about shaft 38. The extremities of sweep bar 40b are carried on intermediate arms ,41,45 such that the bars extend substantially along the total length of the front chamber. Intermediate parts of sweep bar 40b are carried on intermediate arm 43. The radius of arms 41-45 is slightly less than that of the cylindrical base portion 18. Arms 41-45 are rotationally fast with the shaft 38 such that rotation of the shaft 38 rotates the arms 41-45 and thus the sweep bars 39a,40b about the longitudinal axis 20.

The forward sweep bars 39a,40b lie in a cylinder of revolution (indicated by R₁) in close proximity to an inside surface 51 of the semi-cylindrical base portion 18.

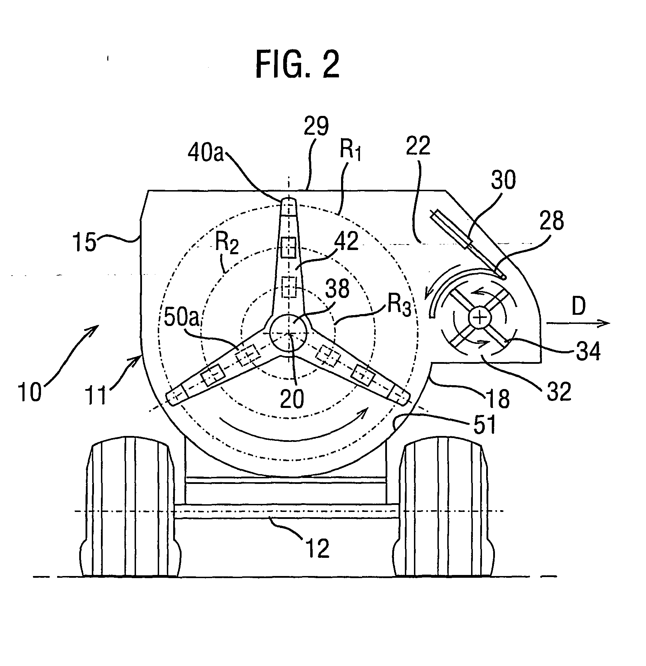

The forward sweep bars 39a,40b have a helical portion 53 which is located in the non-discharge zone 26 and a non-helical portion 55 which comprises three sweep bars 40a, located in the discharge zone 24. The helical portion 53 is pitched and handed such that material is urged forwards in the direction of arrow F when the shaft 38 rotates anticlockwise (when viewing figure 2). The non-helical portions 55 of the sweep bars 40a extend parallel to the shaft 38 such that on rotation of the shaft 38, the sweep bars 40a sweep material circumferentially and not longitudinally.

Although, in the rear chamber 70, the forward auger 39 has three sweep bars 39a, only one of the three bars operates to sweep material forwardly. The one operative sweep bar 39a is provided with a rubber wiper blade along the outer edge thereof to wipe the inside of the body 11 in the rear chamber 70. The other two sweep bars are provided to prevent an out of balance. Similarly, sweep bar 40b is also provided with a rubber wiper blade along the outer edge thereof to wipe the inside of the body 11 in the forward chamber 72.

The rotatable shaft 38 further carries a return ribbon auger 49 in the form of three return sweep bars 50 (only one shown in figure 1) which are also regularly angularly spaced about shaft 38. The extremities of return sweep bars 50 are carried on the front arm 42 and intermediate arm 45 such that the return sweep bars 50 extend through the discharge zone 24 and through the front chamber 72, but not into the rear chamber 70. Intermediate parts of return sweep bars 50 are carried on intermediate arms 41,43. In the discharge zone 24 the return sweep bars 50a are arranged between the front arm 42 and intermediate arm 41 such that they define a cylinder of revolution (indicated by R₃ which is smaller than the cylinder of revolution R₁ of the forward sweep bars 39a,40b.

In the non-discharge zone 26 the return sweep bars 50 are arranged between the intermediate arm 41 and intermediate arm 45 such that they define a cylinder of revolution (indicated by R₂) which is the same as the cylinder of revolution R₃ of the return sweep bars 50a in the discharge zone 24. In other embodiments R₂ can be greater than R₃.

The return sweep bars 50 in both the discharge 24 and non-discharge 26 zones are pitched and oppositely handed to the forward sweep bars 39a,40b such that material is urged in a return direction, indicated by arrow R when the shaft 38 rotates anticlockwise (when viewing figure 2).

Operation of the device is as follows:

Material is introduced into the body 11 via the top open section 29. Typically the shaft 38 will be rotating and the door 28 will be fully closed such that the opening 22 is blocked.

Rotation of the shaft 38 causes both the forward sweep bars 39a,40b and return sweep bars 50 to rotate about the longitudinal axis. The single operative forward bar 39a,40b urges material forwards in the direction of arrow F and the return bars 50 urge material in the direction of arrow R against the flow of material being driven forward, so as to create a bilateral movement of material in the non-discharge zone 26 which induces a mixing, breaking and pulling action to the material. Material is also mixed by a tumbling action as material is raised along one side of the body by the forward 39a,40b and return 50 sweep bars and falls back into the main body.

Material in the discharge zone 24 is urged in the direction of arrow R by sweep blades 50a, and circumferentially by forward sweep blades 40a. Thus, in the discharge zone 24 there is no forward component of material movement created by the bars 50a. However the momentum of material being moved forward in the non-discharge zone 26 is sufficient to urge material adjacent to it in the discharge zone 24 forwards into the discharge zone 24, and thus there will also be a degree of bilateral movement of material in the discharge zone 24.

With the opening 22 blocked, material in the discharge zone 24 will be urged in the return direction towards the non-discharge zone 26 by return sweep bars 50a where it will be further mixed by the bilateral movement created by the forward 39a,40b and return sweep bars 50.

It will be appreciated that net forward movement of material from the non-discharge zone 26 to the discharge zone 24 due to the greater cylinder of revolution of the forward sweep bars 39a,40b is balanced by the increased area of action caused by the plurality of return sweep bars 50a. Thus there is no accumulation of material in the discharge zone 24.

It will also be appreciated that since there is no return ribbon auger in the rear chamber, there is no substantial return movement of material in the rear chamber. Hence there is no pressure build-up due to material being urged against the rear wall 25 which would reduce the efficiency of the mixing apparatus.

When the required amounts of material have been loaded, the mixer vehicle is driven to the delivery location with the combined actions of the forward and return sweep bars 39a,40b,50 continuing to mix the material.

Material is discharged from the body 11 by simply opening door 28 while drive to both the shaft 38 and the feed out rotor 32 continues. When the door is opened, the bars 40a sweep material from the bottom of the discharge zone upwardly until it passes into opening 22 and is acted on by rotor 34. At the same time material continues to be fed forward under the action of forward sweep bars 39a,40b.

As the level of material drops, the return sweep bars 50a in the discharge zone can no longer reach the material and thus eventually no material is returned to the non-discharge zone 26. Material will continue to be urged in the forward and return direction until the level in the non-discharge zone 26 falls sufficiently low such that it is no longer reached by the return sweep bars 50. At this point the material is acted on solely by the forward sweep bars 39a,40b which urge the material forward into the discharge zone 24 where the forward sweep bar portions 40a urge the material to the opening 22 and away from the body.

The mixing of material in the present invention is significantly more intense than in known mixer vehicles as a result of the bilateral material movement in the non-discharge zone. Furthermore the increase in the quantity of material driven rearwards due to the fact that the return auger extends into the non-discharge zone significantly reduces the likelihood of material accumulating in the discharge zone 26.

In other embodiments the degree of forward and return material movement, and thus the degree of mixing can be varied by altering the pitch of the sweep blades, the relative cylinders of revolution of the forward and return sweep bars, and also the extent by which the return sweep bars extend into the non-discharge zone. For example, the return sweep bars need not extend the total length of the front chamber, but part way into the non-discharge zone. In such an embodiment the proportion of material urged in the return direction is reduced.

In another embodiment the return sweep bars may be confined to the discharge zone with no extension into the non-discharge zone. Whilst this does not induce bilateral movement of material in the non-discharge zone, the nature of the sweep bars compared to known solid blade type augers reduces the likelihood of material accumulating in the discharge zone.

## Claims

1. A bulk material mixing apparatus having a container body for receiving material, the body having a discharge zone and a non-discharge zone, and a rotatably driven shaft arranged within and extending along the body, the shaft carrying a forward ribbon auger and a return ribbon auger which is oppositely handed to the forward ribbon auger provided on the shaft, the augers arranged such that on rotation of the shaft, the forward ribbon auger urges material in a forward direction from the non-discharge zone towards the discharge zone, and the return ribbon auger urges material in a return direction which is substantially opposite to the forward direction.

2. A bulk material mixing apparatus according to claim 1, in which the return ribbon auger extends into the non-discharge zone.

3. A bulk material mixing apparatus according to claim 1 or 2, in which the return ribbon auger extends substantially along the length of the body.

4. A bulk material mixing apparatus according to any preceding claim, in which two or three return ribbon augers are provided.

5. A bulk material mixing apparatus according to any preceding claim, in which rotation of the shaft defines a forward auger cylinder of revolution which is significantly greater than the cylinder of revolution of the return ribbon auger, such that the forward auger moves more material per revolution than the return ribbon auger.

6. A bulk material mixing apparatus according to any preceding claim, in which the return ribbon auger defines a cylinder of revolution in the non-discharge zone which is substantially the same as its cylinder of revolution in the discharge zone.

7. A bulk material mixing apparatus according to any preceding claim, in which the non-discharge zone comprises a rear chamber and a forward chamber situated between the rear chamber and the discharge zone and the or each return ribbon auger extends substantially the length of the discharge zone and the forward chamber, there being no return ribbon auger in the rear chamber.

8. A bulk material mixing apparatus according to any preceding claim, in which two or three forward ribbon augers are provided in the rear chamber and one forward ribbon auger is provided in the forward chamber.

9. A bulk material mixing apparatus according to claim 8, in which one of the forward ribbon augers in the rear chamber, and the forward ribbon auger in the forward chamber include a blade along the outer edge such that the forward ribbon auger in the forward chamber and one of the two or three forward ribbon augers in the rear chamber urge material in the forward direction.

10. A mixer vehicle including a bulk material mixing apparatus according to any preceding claim.

## Patentansprüche

1. Mischvorrichtung für Schüttgut mit einem Behälterkörper zur Schüttgutaufnahme, wobei dieser Körper einen Auslassbereich und einen Nichtauslassbereich aufweist, und mit einer zur Drehung angetriebenen Welle, die im Körper angeordnet ist und an diesem entlang verläuft, wobei an dieser Welle eine vorwärtslaufende Bandförderschnecke und eine zur vorwärtslaufenden Bandförderschnecke an der Welle entgegengesetzt gängige rückwärtslaufende Bandförderschnecke vorgesehen sind, wobei die Förderschnecken derart angeordnet sind, dass bei Drehung der Welle die vorwärtslaufende Bandförderschnecke Schüttgut in Vorwärtsrichtung aus der Nichtauslasszone zur Auslasszone hin verdrängt, und die rückwärtslaufende Bandförderschnecke Schüttgut in eine rückwärtige Richtung verdrängt, die im Wesentlichen entgegengesetzt zur Vorwärtsrichtung verläuft.

2. Mischvorrichtung für Schüttgut nach Anspruch 1, bei der die rückwärtslaufende Bandförderschnecke in den Nichtauslassbereich hinein verläuft.

3. Mischvorrichtung für Schüttgut nach Anspruch 1 oder 2, bei der die rückwärtslaufende Bandförderschnecke im Wesentlichen an der Länge des Körpers entlang verläuft.

4. Mischvorrichtung für Schüttgut nach einem der vorstehenden Ansprüche, bei der zwei oder drei rückwärtslaufende Bandförderschnecken vorgesehen sind.

5. Mischvorrichtung für Schüttgut nach einem der vorstehenden Ansprüche, bei der bei Drehung der Welle ein Drehzylinder für die vorwärtslaufende Bandförderschnecke definiert wird, der erheblich größer als der Drehzylinder für die rückwärtslaufende Bandförderschnecke ist, so dass die vorwärtslaufende Bandförderschnecke mehr Schüttgut pro Umdrehung bewegt als die rückwärtslaufende Bandförderschnecke.

6. Mischvorrichtung für Schüttgut nach einem der vorstehenden Ansprüche, bei der bei der rückwärtslaufenden Bandförderschnecke ein Drehzylinder im Nichtauslassbereich definiert wird, der im Wesentlichen ihrem Drehzylinder im Auslassbereich entspricht.

7. Mischvorrichtung für Schüttgut nach einem der vorstehenden Ansprüche, bei der der Nichtauslassbereich eine hintere Kammer und eine vordere Kammer umfasst, die sich zwischen der hinteren Kammer und dem Auslassbereich befindet, und die oder jede rückwärtslaufende Bandförderschnecke im Wesentlichen über die Länge des Auslassbereichs und der vorderen Kammer hinweg verläuft, wobei in der hinteren Kammer keine rückwärtslaufende Bandförderschnecke vorgesehen ist.

8. Mischvorrichtung für Schüttgut nach einem der vorstehenden Ansprüche, bei der zwei oder drei vorwärtslaufende Bandförderschnecken in der hinteren Kammer und eine vorwärtslaufende Bandförderschnecke in der vorderen Kammer vorgesehen sind.

9. Mischvorrichtung für Schüttgut nach Anspruch 8, bei der eine der vorwärtslaufenden Bandförderschnecken in der hinteren Kammer, und die vorwärtslaufende Bandförderschnecke in der vorderen Kammer an ihrem Außenrand entlang eine Schaufel aufweisen, so dass die vorwärtslaufende Bandförderschnecke in der vorderen Kammer und eine der zwei oder drei vorwärtslaufenden Bandförderschnecken in der hinteren Kammer Schüttgut in Vorwärtsrichtung verdrängen.

10. Mischfahrzeug mit einer Mischvorrichtung für Schüttgut nach einem der vorstehenden Ansprüche.

## Revendications

1. Appareil malaxeur de matériau en vrac comportant un corps de conteneur pour recevoir le matériau, le corps présentant une zone de décharge et une zone de non-décharge, et un arbre tournant d'entraînement prévu dans celui-ci et qui s'étend le long du corps, l'arbre supportant une vis à ruban d'avance et une vis à ruban de retour dont le sens de rotation est l'inverse de celui de la vis à ruban d'avance prévue sur l'arbre, les vis à ruban étant prévues pour que lors de la rotation de l'arbre, la vis à ruban d'avance force le matériau vers l'avant depuis la zone de non-décharge vers la zone de décharge, et en ce que la vis à ruban de retour pousse le matériau dans un sens de renvoi qui est sensiblement opposé au sens aller.

2. Appareil malaxeur de matériau en vrac selon la revendication 1, dans lequel la vis à ruban de retour s'étend dans la zone de non-décharge.

3. Appareil malaxeur de matériau en vrac selon la revendication 1 ou 2, dans lequel la vis à ruban de retour s'étend sensiblement sur la longueur du corps.

4. Appareil malaxeur de matériau en vrac selon l'une quelconque des revendications précédentes, dans lequel deux ou trois vis à ruban de retour sont prévues.

5. Appareil malaxeur de matériau en vrac selon l'une quelconque des revendications précédentes, dans lequel la rotation de l'arbre délimite un cylindre de révolution pour la vis à ruban d'avance qui est sensiblement supérieur au cylindre de révolution de la vis à ruban de retour, de sorte que la vis à ruban d'avance déplace plus de matériau par révolution que la vis à ruban de retour.

6. Appareil malaxeur de matériau en vrac selon l'une quelconque des revendications précédentes, dans lequel la vis à ruban de retour délimite un cylindre de révolution dans la zone de non-décharge qui est sensiblement identique à son cylindre de révolution dans la zone de décharge.

7. Appareil malaxeur de matériau en vrac selon l'une quelconque des revendications précédentes, dans lequel la zone de non-décharge comporte une chambre arrière et une chambre avant située entre la chambre arrière et la zone de décharge, et dans lequel la ou chaque vis à ruban de retour s'étend sensiblement le long de la zone de décharge et le long de la chambre avant, aucune vis à ruban de retour n'étant prévue dans la chambre arrière.

8. Appareil malaxeur de matériau en vrac selon l'une quelconque des revendications précédentes, dans lequel deux ou trois vis à ruban d'avance sont prévues dans la chambre arrière, et dans lequel une vis à ruban d'avance est prévue dans la chambre avant.

9. Appareil malaxeur de matériau en vrac selon la revendication 8, dans lequel une des vis à ruban d'avance dans la chambre arrière et la vis à ruban d'avance dans la chambre avant comportent une lame le long du bord extérieur de sorte que la vis à ruban d'avance dans la chambre avant et une des deux ou trois vis à ruban d'avance dans la chambre arrière forcent le matériau vers l'avant.

10. Véhicule malaxeur comprenant un appareil malaxeur de matériau en vrac selon l'une quelconque des revendications précédentes.
